# EUROPÄISCHE PATENTSCHRIFT

(11) **EP 2 867 323 B1**
(45) Veröffentlichungstag und Bekanntmachung des Hinweises auf die Patenterteilung: **10.08.2016**
(21) Anmeldenummer: 13727924.6
(22) Anmeldetag: 11.06.2013
(51) Int. Cl.: C09K 5/10, C08L 83/04, C07F 7/21

(54) **SILOXAN-MISCHUNGEN**
SILOXANE MIXTURES
MÉLANGES DE SILOXANES

(30) Priorität: 29.06.2012 DE 102012211258
(43) Veröffentlichungstag der Anmeldung: 06.05.2015
(73) Patentinhaber: Wacker Chemie AG, 81737 München (DE)
(72) Erfinder: HOFFMANN, Florian, 81479 München (DE); STOHRER, Jürgen, 82049 Pullach (DE)
(74) Vertreter: Fritz, Helmut
(86) Internationale Anmeldenummer: PCT/EP2013/062037
(87) Internationale Veröffentlichungsnummer: WO 2014/001081

(56) Entgegenhaltungen:
- EP-B1- 1 473 346
- DE-A1- 3 839 333

## Beschreibung

Die vorliegende Erfindung betrifft Mischungen von Siloxanen und deren Verwendung als Wärmeträgerflüssigkeit. Organosiloxane und Organopolysiloxane (Siliconöle), im Folgenden zusammenfassend kurz als "Siloxane" bezeichnet, finden auf Grund ihrer hohen thermischen Stabilität, ihres weiten Flüssigkeitsbereiches und der geringen Temperaturabhängigkeit ihrer Viskosität häufige Anwendung als Wärmeträgerflüssigkeiten. In DE 2754705 A1 werden die Vorteile von Siloxanen gegenüber anderen Wärmeträgern dargelegt. Insbesondere im Bereich sehr tiefer (unter -50°C) oder sehr hoher Temperaturen (200-400°C) sind sie organischen Wärmeträgerflüssigkeiten überlegen oder die einzig verwendbare nichtionische Wärmeträgerflüssigkeit überhaupt. Beispielsweise sind in EP 1473346 B1 Mischungen linearer und cyclischer Dimethylpolysiloxane beschrieben, die bis -100°C als Kältemittel verwendbar sind. Weiterhin beschreibt die Broschüre "SYLTHERM 800 Heat Transfer Fluid - Product Technical Data" der Firma The Dow Chemical Company (CH 153-046-E-1097, Oktober 1997) ein lineares, permethyliertes Siliconöl ("Syltherm 800") und gibt als obere Dauergebrauchstemperatur 400°C an (geschlossenes System unter Luftausschluß). Weiterhin ist dort beschrieben, daß bei kurzfristiger thermischer Belastung bis zu 538°C ohne erhebliche Zersetzung erreichbar sind.

Die genannten Eigenschaften der Siloxane prädestinieren sie für den Einsatz als Hochtemperatur-Wärmeträgerflüssigkeiten, z.B. in solarthermischen Kraftwerken, insbesondere in solchen mit Parabolrinnen- und Fresnel-Technologie, wo die wärmeträgerflüssigkeit jahrelang einer hohen thermischen Belastung bis 400°C und starken Temperaturschwankungen ausgesetzt ist. Die Verwendung von Siliconölen in solarthermischen Vorrichtungen ist in DE 2754705 A1, US 4122109 und US 4193885 beschrieben.

Die Zusammensetzung von Siloxan-Mischungen ist durch Umlagerungsprozesse temperaturabhängig und dadurch bis zum Erreichen des Gleichgewichtszustandes bei der gewählten Temperatur auch zeitabhängig. Bei linearen, permethylierten Siliconölen kann das Erreichen des Gleichgewichtszustandes beispielsweise bei 400°C einige Tage benötigen. Parallel dazu ändern sich damit auch die physikalischen Eigenschaften. Das kann dazu führen, daß sich wichtige Betriebsparameter einer mit einer Siloxan-Mischung als Wärmeträgerflüssigkeit betriebenen Vorrichtung, beispielsweise der Dampfdruck oder die Viskosität, mit der Zeit erheblich ändern. Dies ist nachteilig, da es einen zusätzlichen Steuer- und Regelaufwand oder sogar einen Mehraufwand bei der Konstruktion der Vorrichtung erforderlich machen kann oder die Vorrichtung in diesem Zeitraum nur eingeschränkt oder gar nicht nutzbar sein kann.

Die Patentschriften US 4122109 und US 4193885 beschreiben den Zusatz metallhaltiger Stabilisatoren sowie optional wasserstoff-haltiger Silicium-Verbindungen zu nicht-cyclischen Methylpolysiloxanen, um die temperaturabhängige Veränderung der chemischen Zusammensetzung zu unterdrücken und so die Zusammensetzung und die physikalischen Eigenschaften zeitlich stabil zu halten. Aus den Beispielen ist jedoch ersichtlich, daß die Umlagerungen nicht völlig unterdrückt werden können. In der zugehörigen, oben genannten Produktbroschüre ("Syltherm 800") wird angegeben, daß die Umlagerungsprozesse stark verlangsamt doch stattfinden und schließlich nach einigen Monaten der Gleichgewichtszustand erreicht wird. Dies ist mit einem erheblichen Anstieg des Dampfdruckes verbunden. Da Wärmeträgerflüssigkeiten aus Kostengründen in solarthermischen Kraftwerken jedoch jahrelang im Einsatz sind, ist der Stabilisatorzusatz somit für diese Anwendung nicht geeignet, da er die Umlagerungen über diesen Zeitraum hinweg doch nicht verhindern kann, und durch die durch ihn erhöhten Materialkosten sogar nachteilig.

Die Aufgabe der Erfindung ist daher, Siloxane bereitzustellen, die nach Erreichen einer bestimmten Temperatur zeitlich annähernd konstante physikalische Eigenschaften aufweisen, um die genannten Nachteile zu vermeiden.

Es wurde nun gefunden, daß bestimmte Siloxan-Mischungen bei thermischer Belastung bei einer konstanten Temperatur zeitlich annähernd konstante physikalische Eigenschaften aufweisen können, obwohl sich ihre chemische Zusammensetzung zeitlich bis zum Gleichgewichtszustand hin verändert. Die Zusammensetzung dieser Siloxan-Mischungen muß dabei überraschenderweise nicht der Gleichgewichtszusammensetzung bei dieser Temperatur entsprechen.

Gegenstand der Erfindung sind Mischungen von Methylpolysiloxanen enthaltend mindestens zwei Methylpolysiloxane, ausgewählt aus linearen Verbindungen der allgemeinen Formel I

Me₃SiO-(Me₂SiO)ₓ-SiMe₃ (I),

und cyclischen Verbindungen der allgemeinen Formel II

(Me₂SiO)_{y} (II),

wobei
die Mischung mindestens ein lineares Methylpolysiloxan der allgemeinen Formel I und mindestens ein cyclisches Methylpolysiloxan der allgemeinen Formel II enthält,
- **Me**: Methylrest bedeutet,
- **x**: Werte größer oder gleich Null aufweist und der mit den Stoffmengenanteilen gewichtete arithmetische Mittelwert von **x** über alle linearen Methylpolysiloxane zwischen 3 und 20 liegt,
- **y**: Werte größer oder gleich 3 aufweist und der mit den Stoffmengenanteilen gewichtete arithmetische Mittelwert von **y** über alle cyclischen Methylpolysiloxane zwischen 3 und 6 liegt,
das Zahlenverhältnis der Me₃Si-Kettenendgruppen in den Verbindungen der allgemeinen Formel I zur Summe aus Me₂SiO-Einheiten in den Verbindungen der allgemeinen Formeln I und II mindestens 1 : 2 und höchstens 1 ; 10 ist,
die Anteile der linearen Methylpolysiloxane der allgemeinen Formel I unabhängig voneinander
für **x** = Null zwischen Null und 14 Massen-%,
für **x** = 1 bis 3 jeweils zwischen Null und 14 Massen-%,
für **x** = 4 und 5 jeweils zwischen Null und 14 Massen-%,
für **x** = 6 bis 9 jeweils zwischen Null und 16 Massen-%,
für **x** = 10 und 11 jeweils zwischen Null und 12 Massen-%,
für **x** = 12 bis 14 jeweils zwischen Null und 10 Massen-%,
für **x** = 15 bis 28 jeweils zwischen Null und 10 Massen-%,
für **x** = 29 und 30 jeweils zwischen Null und 8 Massen-%,
für **x** = 31 bis 34 jeweils zwischen Null und 4 Massen-%,
für **x** = 35 bis 40 jeweils zwischen Null und 2 Massen-%,
für **x** = 41 bis 70 jeweils zwischen Null und 1 Massen-%, und
für **x** größer als 70 jeweils zwischen Null und 0,5 Massen-% betragen,
die Anteile der cyclischen Methylpolysiloxane der allgemeinen Formel, II unabhängig voneinander
für **y** = 3 zwischen Null und 10 Massen-%,
für **y** = 4 zwischen Null und 30 Massen-%,
für **y** = 5 zwischen Null und 15 Massen-%,
für **y** = 6 zwischen Null und 10 Massen-%,
für **y** = 7 zwischen Null und 8 Massen-%,
für **y** = 8 bis 11 jeweils zwischen Null und 5 Massen-%,
für **y** = 12 bis 15 jeweils zwischen Null und 2,5 Massen-%,
für **y** = 16 bis 19 jeweils zwischen Null und 2 Massen-%,
für **y** = 20 bis 40 jeweils zwischen Null und 1 Massen-%, und
für **y** größer als 40 jeweils zwischen Null und 0,5 Massen-% betragen,
die Summe der Anteile aller cyclischen Methylpolysiloxane der allgemeinen Formel II mindestens 10 Massen-% und höchstens 40 Massen-% beträgt, und
die Mischung bei 25°C flüssig ist und eine Viskosität von weniger als 100 mPa*s aufweist.

Die Zusammensetzung der Mischung ist dabei so gewählt, daß mindestens eine der physikalischen Eigenschaften Dichte, Dampfdruck, Viskosität, Wärmekapazität oder Wärmeleitfähigkeit während thermischer Belastung der Mischung bei einer konstanten Temperatur zeitlich annähernd konstant bleibt. Die Zusammensetzung der Mischung kann, wenn die gewünschten physikalischen Eigenschaften aller Komponenten der Mischung temperaturabhängig bekannt sind, durch Berechnung oder auch empirisch ermittelt werden. Der Fall, daß die Zusammensetzung der Mischung der Gleichgewichtsmischung bei der gewählten Temperatur entspricht, ist trivial. Die Erfindung beruht darauf, daß auch Mischungen anderer Zusammensetzung als der Gleichgewichtszusammensetzung die physikalischen Eigenschaften der Gleichgewichtsmischung bei der gewählten Temperatur haben können.

Die erfindungsgemäßen Siloxan-Mischungen haben den Vorteil, daß mindestens eine physikalische Eigenschaft, ausgewählt aus Dichte, Dampfdruck, Viskosität, Wärmekapazität oder Wärmeleitfähigkeit, zeitlich konstant gehalten werden kann, obwohl sich die chemische Zusammensetzung der Siloxan-Mischung bis zum Erreichen des Gleichgewichtszustandes noch verändert. Bei Konstruktion und Betrieb der solarthermischen Vorrichtung braucht daher keine Rücksicht auf etwaige Veränderungen der ausgewählten physikalischen Eigenschaften genommen zu werden.

Die Variable **x** nimmt bevorzugt Werte zwischen Null und 100, besonders bevorzugt zwischen Null und 70, ganz besonders bevorzugt zwischen Null und 40 an. Der mit den Stoffmengenanteilen gewichtete arithmetische Mittelwert von x über alle linearen Methylpolysiloxane liegt bevorzugt zwischen 4 und 15, besonders bevorzugt zwischen 5 und 10, jeweils einschließlich der genannten Grenzwerte.
Die Variable **y** nimmt bevorzugt Werte zwischen 3 und 100, besonders bevorzugt zwischen 3 und 70, ganz besonders bevorzugt zwischen 3 und 40 an. Der mit den Stoffmengenanteilen gewichtete arithmetische Mittelwert von **y** über alle cyclischen Methylpolysiloxane liegt bevorzugt zwischen 3,5 und 5,5, besonders bevorzugt zwischen 4 und 5, insbesondere zwischen 4 und 4,5, jeweils einschließlich der genannten Grenzwerte.
Das Zahlenverhältnis der Me₃Si-Kettenendgruppen in der allgemeinen Formel I zur Summe aus Me₂SiO-Einheiten in den allgemeinen Formeln I und II beträgt bevorzugt mindestens 1 : 2,5 und höchstens 1 : 8, besonders bevorzugt mindestens 1 : 3 und höchstens 1 : 6.

Die Anteile der linearen Methylpolysiloxane der allgemeinen Formel I betragen unabhängig voneinander bevorzugt
für **x =** Null zwischen 0,1 und 12 Massen-%,
für **x** = 1 bis 3 jeweils zwischen Null und 11 Massen-%,
für **x** = 4 und 5 jeweils zwischen 1 und 11 Massen-%,
für **x** = 6 bis 9 jeweils zwischen 1 und 14 Massen-%,
für **x** = 10 und 11 jeweils zwischen 1 und 10 Massen-%,
für **x** = 12 bis 14 jeweils zwischen 0,5 und 7,5 Massen-%,
für **x** = 15 bis 28 jeweils zwischen 0,1 und 7,5 Massen-%,
für **x** = 29 und 30 jeweils zwischen 0,1 und 6 Massen-%,
für **x** = 31 bis 34 jeweils zwischen Null und 3 Massen-%,
für **x** = 35 bis 40 jeweils zwischen Null und 1,5 Massen-%,
für **x** = 41 bis 70 jeweils zwischen Null und 0,5 Massen-%, und
für **x** größer als 70 jeweils zwischen Null und 0,1 Massen-%, und unabhängig voneinander besonders bevorzugt
für **x** = Null zwischen 0,5 und 10 Massen-%,
für **x** = 1 bis 3 jeweils zwischen Null und 8 Massen-%,
für **x** = 4 und 5 jeweils zwischen 1,5 und 8 Massen-%,
für **x** = 6 bis 9 jeweils zwischen 1,5 und 12 Massen-%,
für **x** 10 und 11 jeweils zwischen 1,5 und 8 Massen-%,
für **x** = 12 bis 14 jeweils zwischen 1 und 5 Massen-%,
für **x** = 15 bis 28 jeweils zwischen 0,2 und 5 Massen-%,
für **x** = 29 und 30 jeweils zwischen 0,1 und 4 Massen-%,
für **x** = 31 bis 34 jeweils zwischen Null und 2 Massen-%,
für **x =** 35 bis 40 jeweils zwischen Null und 1 Massen-%,
für **x** = 41 bis 70 jeweils zwischen Null und 0,1 Massen-%, und
für **x** größer als 70 jeweils Null Massen-%.

Die Anteile der cyclischen Methylpolysiloxane der allgemeinen Formel II betragen unabhängig voneinander bevorzugt
für **y** = 3 zwischen Null und 7,5 Massen-%,
für **y =** 4 zwischen Null und 25 Massen-%,
für **y** = 5 zwischen Null und 12,5 Massen-%,
für **y** = 6 zwischen Null und 7,5 Massen-%,
für **y** = 7 zwischen Null und 6 Massen-%,
für **y** = 8 bis 11 jeweils zwischen Null und 3,5 Massen-%,
für **y** = 12 bis 15 jeweils zwischen Null und 2 Massen-%,
für **y** = 16 bis 19 jeweils zwischen Null und 1,5 Massen-%,
für **y** = 20 bis 40 jeweils zwischen Null und 0,8 Massen-%, und
für **y** größer als 40 jeweils zwischen Null und 0,2 Massen-%, und unabhängig voneinander besonders bevorzugt
für **y** = 3 zwischen Null und 5 Massen-%,
für **y** = 4 zwischen Null und 20 Massen-%,
für **y** = 5 zwischen Null und 10 Massen-%,
für **y** = 6 zwischen Null und 5 Massen-%,
für **y** = 7 zwischen Null und 4 Massen-%,
für **y** = 8 bis 11 jeweils zwischen Null und 2 Massen-%,
für **y** = 12 bis 15 jeweils zwischen Null und 1,5 Massen-%,
für **y** = 16 bis 19 jeweils zwischen Null und 1 Massen-%,
für **y** = 20 bis 40 jeweils zwischen Null und 0,5 Massen-%, und
für **y** größer als 40 jeweils Null Massen-%.

Vorzugsweise beträgt die Summe der Anteile aller cyclischen Methylpolysiloxane der allgemeinen Formel II mindestens 12,5 Massen-% und höchstens 35 Massen%, insbesondere mindestens 15 Massen-% und höchstens 30 Massen-%.

Die Viskosität der erfindungsgemäßen Siloxan-Mischungen bei 25°C weist bevorzugt Werte unter 50 mPa*s, besonders bevorzugt unter 20 mPa*s, ganz besonders bevorzugt unter 10 mPa*s auf.

Die erfindungsgemäßen Siloxan-Mischungen können in einer monomodalen, bimodalen oder multimodalen Molmassenverteilung vorliegen, gleichzeitig kann die Molmassenverteilung eng oder breit sein. Vorzugsweise weisen die erfindungsgemäßen Siloxan-Mischungen eine bimodale, trimodale oder tetramodale Molmassenverteilung auf.

Die erfindungsgemäßen Siloxan-Mischungen enthalten bevorzugt weniger als 1000 ppm Wasser, besonders bevorzugt weniger als 500 ppm Wasser, ganz besonders bevorzugt weniger als 200 ppm Wasser, jeweils bezogen auf die Masse.

In einer bevorzugten Ausführungsform bestehen die erfindungsgemäßen Mischungen von Methylpolysiloxanen aus 1-10 Massen-% linearen Methylpolysiloxanen der allgemeinen Formel I, in denen x Werte zwischen Null und 8 annimmt und der mit den Stoffmengenanteilen gewichtete arithmetische Mittelwert von x zwischen Null und 1,5 liegt,
15-30 Massen-% cyclischen Methylpolysiloxanen der allgemeinen Formel II, in denen **y** Werte zwischen 3 und 12 annimmt und der mit den Stoffmengenanteilen gewichtete arithmetische Mittelwert von **y** zwischen 3,5 und 5 liegt, und
60-84 Massen-% linearen Methylpolysiloxanen der allgemeinen Formel I, in denen **x** Werte zwischen 4 und 70 annimmt und der mit den Stoffmengenanteilen gewichtete arithmetische Mittelwert von **x** zwischen 4 und 15 liegt, jeweils einschließlich der genannten Grenzwerte,
wobei die Mischungen eine trimodale Molmassenverteilung aufweisen und bei 25°C eine Viskosität von weniger als 10 mPa*s haben.

Vorzugsweise verändern sich die physikalischen Eigenschaften, die ausgewählt werden aus Dichte, Dampfdruck, Viskosität, Wärmekapazität und Wärmeleitfähigkeit der Mischung, insbesondere alle diese Eigenschaften, nach Erreichen einer konstanten Temperatur zwischen 300°C und 600°C unter Luftausschluß bis zum Erreichen der Gleichgewichtszusammensetzung um maximal 15%, bevorzugt maximal 10%, besonders bevorzugt maximal 5%. Erfindungsgemäße Siloxan-Mischungen können hergestellt werden, indem reine Siloxane der allgemeinen Formeln I oder II oder beliebige Gemische von solchen Siloxanen in jedweder Reihenfolge zubereitet, gemischt und zueinander dosiert werden, gegebenenfalls auch mehrfach wiederholend, gegebenenfalls auch abwechselnd oder gleichzeitig. Durch geeignete Verfahren, beispielsweise Destillation, können Siloxane oder Siloxan-Gemische auch wieder entfernt werden. Die Zusammensetzung der erfindungsgemäßen Siloxan-Mischung wird dabei durch die eingesetzten oder entfernten Mengen von Siloxanen der allgemeinen Formeln I und II gesteuert.
Das Verfahren kann bei Raumtemperatur und Umgebungsdruck durchgeführt werden, aber auch bei erhöhter oder erniedrigter Temperatur sowie erhöhtem oder erniedrigtem Druck.

Erfindungsgemäße Siloxan-Mischungen können weiterhin hergestellt werden, indem geeignete Chlorsilane, Alkoxysilane oder Gemische von Chlorsilanen oder Alkoxysilanen hydrolysiert oder cohydrolysiert und anschließend von Nebenprodukten wie Chlorwasserstoff oder Alkoholen sowie gegebenenfalls von überschüssigem Wasser befreit werden. Optional kann zu der erhaltenen Siloxan-Mischung weiteres Siloxan hinzugefügt oder durch geeignete Verfahren, beispielsweise Destillation, entfernt werden. Das Verfahren kann bei Raumtemperatur und Umgebungsdruck durchgeführt werden, aber auch bei erhöhter oder erniedrigter Temperatur sowie erhöhtem oder erniedrigtem Druck. Die Zusammensetzung der erfindungsgemäßen Siloxan-Mischung wird dabei durch das Verhältnis der eingesetzten und gegebenenfalls wieder entfernten Mengen von Silanen beziehungsweise Siloxanen gesteuert.

Erfindungsgemäße Siloxan-Mischungen können außerdem hergestellt werden, indem reine Siloxane der allgemeinen Formeln I oder II oder beliebige Gemische von solchen Siloxanen auf Temperaturen erhitzt werden, bei denen die erwähnten Umlagerungsprozesse stattfinden, so daß Siloxan-Mischungen mit veränderter Zusammensetzung erhalten werden. Diese Zusammensetzung kann der Gleichgewichtszusammensetzung bei dieser Temperatur entsprechen, muß dies aber nicht. Das Erhitzen kann in einem offenen oder geschlossenen System stattfinden, bevorzugt unter einer Schutzgasatmosphäre. Das Verfahren kann bei Umgebungsdruck durchgeführt werden, aber auch erhöhtem oder erniedrigtem Druck. Das Erhitzen kann unkatalysiert oder in Gegenwart eines homogenen oder heterogenen Katalysators, beispielsweise einer Säure oder Base, stattfinden. Der Katalysator kann danach deaktiviert oder aus der Siloxan-Mischung entfernt werden, beispielsweise durch Destillation oder Filtration, muß dies aber nicht. Durch geeignete Verfahren, beispielsweise Destillation, können auch Siloxane oder Siloxan-Gemische wieder entfernt werden. Die Zusammensetzung der erfindungsgemäßen Siloxan-Mischung wird dabei durch das Verhältnis der eingesetzten und gegebenenfalls wieder entfernten Mengen von Siloxanen der allgemeinen Formeln I und II, die Temperatur sowie Art (offenes oder geschlossenes System) und Dauer des Erhitzens gesteuert.

Die drei vorstehend beschriebenen Verfahren können auch kombiniert werden. Sie können optional in Gegenwart eines oder mehrerer Lösungsmittel durchgeführt werden. Bevorzugt wird kein Lösungsmittel verwendet. Die eingesetzten Silane, Silan-Gemische, Siloxane und Siloxan-Gemische sind entweder Standard-Produkte der Silicon-Industrie oder können durch literaturbekannte Synthese-Verfahren hergestellt werden.

Die erfindungsgemäßen Siloxan-Mischungen können gelöste oder suspendierte oder emulgierte Zusatzstoffe enthalten, um ihre Stabilität zu erhöhen oder ihre physikalischen Eigenschaften zu beeinflussen. Gelöste Metall-Verbindungen, beispielsweise Eisen-Carboxylate, können als Radikalfänger und Oxidationsinhibitoren die Haltbarkeit eines Wärmeträgers erhöhen. Suspendierte Zusatzstoffe, beispielsweise Kohlenstoff oder Eisenoxid, können physikalische Eigenschaften eines Wärmeträgers, beispielsweise die Wärmekapazität oder die Wärmeleitfähigkeit, verbessern.

Vorzugsweise beträgt die Summe der Anteile aller Methylpolysiloxane der allgemeinen Formeln I oder II mindestens 95 Massen-%, besonders mindestens 98 Massen-%, insbesondere mindestens 99,5 Massen-%, bezogen auf die gesamte Mischung.

Die erfindungsgemäßen Siloxan-Mischungen können als Wärmeträgerflüssigkeiten verwendet werden, bevorzugt als Hochtemperatur-Wärmeträger in solarthermischen Vorrichtungen, insbesondere in Parabolrinnen- und Fresnel-Kraftwerken. Sie können weiterhin als Wärmeträgerflüssigkeiten in der chemischen Industrie sowie der Metallindustrie, als Wärmeträgerflüssigkeiten für tiefe Temperaturen und als Arbeitsfluide in Wärmekraftmaschinen, insbesondere solarthermischen, verwendet werden. Die Siloxan-Mischungen werden bevorzugt verwendet bei Temperaturen von 200°C bis 550°C, besonders bevorzugt 300°C bis 500°C, insbesondere 350°C bis 450°C. Bei Temperaturen oberhalb 200°C ist der Einsatz unter einer Schutzgasatmosphäre bevorzugt, um eine oxidative Zersetzung zu verhindern.

### Beispiele

### Beispiel 1

### Vergleichsbeispiel (nicht erfindungsgemäß)

151 g eines Siliconöls Wacker AK 5 (Gemisch linearer Methylpolysiloxane der allgemeinen Formel I mit einem mit den Stoffmengenanteilen gewichteten arithmetischen Mittelwert von **x** = 8,2 (²⁹Si-NMR), entsprechend 10,2 Wiederholungseinheiten inklusive der zwei Trimethylsilyl-Kettenendgruppen bzw. durchschnittlich 10,2 Silicium-Atomen pro Molekül; bestehend aus (jeweils GC-Flächen-%) : 0,03% Me₃SiO-(Me₂SiO)₂-SiMe₃, 0,65% Me₃SiO-(Me₂SiO)₃-SiMe₃, 4,0% Me₃SiO-(Mₑ2SiO)₄-SiMe₃, 9,2% Me₃SiO-(Me₂SiO)₅-SiMe₃, 12,6% Me₃SiO-(Me₂SiO)₆-SiMe₃, 13,0% Me₃SiO-(Me₂SiO)₇-SiMe₃, 11,8% Me₃SiO-(Me₂SiO)₈-SiMe₃, 9, 9% Me₃SiO-(Me₂SiO)₉-SiMe₃, 8,1% Me₃SiO-(Me₂SiO)₁₀-SiMe₃, 6,5% Me₃SiO-(Me₂SiO)₁₁-SiMe₃, 5,1% Me₃SiO-(Me₂SiO)₁₂-SiMe₃, 19,0% Me₃SiO-(Me₂SiO)ₓ-SiMe₃ mit **x** > 12, 0,12% cyclische Methypolysiloxane der allgemeinen Formel II mit **y** = 5 bis 12; Viskosität 5,4 mPa*s) werden in einem Autoklaven mit Druckaufnehmer 1 Woche auf 405°C Innentemperatur erhitzt. Die aufgenommene Dampfdruck-Zeit-Kurve in Tabelle 1 zeigt, daß erst nach ∼5 Tagen ein annähernd konstanter Druck von -16 x 10⁵ Pa erreicht wird. Das Siliconöl weist danach folgende Zusammensetzung auf (jeweils GC-Flächen-%):
1,4% Me₃Si-O-SiMe₃, 2,5% Me₃SiO-Me₂SiO-SiMe₃, 3,5%
Me₃SiO-(Me₂SiO)₂-SiMe₃, 4, 3% Me₃SiO-(Me₂SiO)₃-SiMe₃, 5, 5%
Me₃SiO-(Me₂SiO)₄-SiMe₃, 6,9% Me₃SiO-(Me₂SiO)₅-SiMe₃, 7,7%
Me₃SiO-(Me₂SiO)₆-SiMe₃, 7,4% Me₃SiO-(Me₂SiO)₇-SiMe₃, 6,5%
Me₃SiO-(Me₂SiO)ₛ-SiMe₃, 5,5% Me₃SiO-(Me₂SiO)₉-SiMe₃, 4,6%
Me₃SiO-(Me₂SiO)₁₀-SiMe₃, 3,8% Me₃SiO-(Me₂SiO)₁₁-SiMe₃, 3,2%
Me₃SiO-(Me₂SiO)₁₂-SiMe₃, 20,2% Me₃SiO-(Me₂SiO)ₓ-SiMe₃ mit **x** > 12,
1,8% (Me₂SiO)₃, 10,1% (Me₂SiO)₄, 3,6% (Me₂SiO)₅, 0,9% (Me₂SiO)₆,
0,3% (Me₂SiO)₇, 0,3% (Me₂SiO)_{y} mit **y** > 7; mit den Stoffmengenanteilen gewichteter arithmetischer Mittelwert von **x** = 7,6 (²⁹Si-NMR); Viskosität 4,6 mPa*s.

### Beispiel 2

### Siloxan-Mischung mit konstantem Dampfdruck

150 g einer Mischung aus 80 Massen-% Siliconöl Wacker AK 5 (Zusammensetzung siehe Beispiel 1), 16 Massen-% Octamethylcyclotetrasiloxan und 4 Massen-% Hexamethyldisiloxan (berechnete Zusammensetzung: 4,0% Me₃Si-O-SiMe₃, 0,02% Me₃SiO-(Me₂SiO)₂-SiMe₃, 0, 52% Me₃SiO-(Me₂SiO)₃-SiMe₃, 3,2% Me₃SiO-(Me₂SiO)₄-SiMe₃, 7,4% Me₃SiO-(Me₂SiO)₅-SiMe₃, 10,1% Me₃SiO-(Me₂SiO)₆-SiMe₃, 10,4% Me₃SiO-(Me₂SiO)₇-SiMe_{3,} 9,4% Me₃SiO-(Me₂SiO)₈-SiMe₃, 7,9% Me₃SiO-(Me₂SiO) ₉-SiMe₃, 6,5% Me₃SiO-(Me₂SiO)₁₀-SiMe₃, 5,2% Me₃SiO-(Me₂SiO)₁₁-SiMe₃, 4,1% Me₃SiO-(Me₂SiO)₁₂-SiMe₃, 15,2% Me₃SiO-(Me₂SiO)ₓ-SiMe₃ mit **x** > 12, 16,0% (Me₂SiO)₄, 0,10% cyclische Methypolysiloxane der allgemeinen Formel II mit **y** = 5 bis 12; Viskosität 4,6 mPa*s) werden in einem Autoklaven mit Druckaufnehmer 1 Woche auf 400°C Innentemperatur erhitzt. Die aufgenommene Dampfdruck-Zeit-Kurve in Tabelle 1 zeigt, daß sofort nach Erreichen der 400°C ein annähernd konstanter Druck von -17 x 10⁵ Pa erreicht wird. Das Siliconöl weist danach folgende Zusammensetzung auf (jeweils GC-Flächen-%):
4,6% Me₃Si-O-SiMe₃, 1, 9% Me₃SiO-Me₂SiO-SiMe₃, 2,7%
Me₃SiO-(Me₂SiO)₂-SiMe₃, 3,4% Me₃SiO-(Me₂SiO)₃-SiMe₃, 4,4%
Me₃SiO-(Me₂SiO)₄-SiMe₃, 5,8% Me₃SiO-(Me₂SiO)₅-SiMe₃, 6,8%
Me₃SiO-(Me₂SiO)₆-SiMe₃, 6,7% Me₃SiO-(Me₂SiO)₇-SiMe₃, 6,0%
Me₃SiO-(Me₂SiO)₈-SiMe₃, 5,1% Me₃SiO-(Me₂SiO)₉-SiMe₃, 4,4%
Me₃SiO-(Me₂SiO)₁₀-SiMe₃, 3,7% Me₃SiO-(Me₂SiO)₁₁-SiMe₃, 3,2%
Me₃SiO-(Me₂SiO)₁₂-SiMe₃, 21,7% Me₃SiO-(Me₂SiO)ₓ₋SiMe₃ mit **x** > 12,
1,9% (Me₂SiO)₃, 11,7% (Me₂SiO)₄, 4,3% (Me₂SiO)₅, 1,1% (Me₂SiO)₆,
0,3% (Me₂SiO)₇, 0,3% (Me₂SiO)_{y} mit **y** > 7; mit den Stoffmengenanteilen gewichteter arithmetischer Mittelwert von **x** = 8,6 (²⁹Si-NMR); Viskosität 4,8 mPa*s.

**Tabelle 1**

| Zeit [h] | Bsp. 1* Druck [10⁵ Pa] | Bsp. 2 Druck [10⁵ Pa] | Zeit [h] | Bsp. 1* Druck [10⁵ Pa] | Bsp. 2 Druck [10⁵ Pa] |
|---|---|---|---|---|---|
| 0 | 5,8 | 16,2 | 24 | 12,0 | 16,4 |
| 1 | 6, 5 | 17,3 | 36 | 13,2 | 16,7 |
| 2 | 7,2 | 17,4 | 48 | 13,7 | 16,7 |
| 3 | 7,7 | 17,1 | 60 | 14,3 | 17,0 |
| 4 | 8,1 | 17, 0 | 72 | 14,4 | 17,2 |
| 5 | 8,5 | 17,2 | 84 | 14,8 | 16,7 |
| 6 | 8,7 | 17,1 | 96 | 15,1 | 17,3 |
| 7 | 9,1 | 16,7 | 108 | 15,4 | 17,2 |
| 8 | 9,3 | 16,7 | 120 | 15,7 | 17,0 |
| 9 | 9,5 | 16,8 | 132 | 15,8 | 17,3 |
| 10 | 9,6 | 16,8 | 144 | 15,8 | 17,3 |
| 11 | 9,7 | 16,7 | 156 | 16,0 | 17,3 |
| 12 | 10,1 | 16,4 | 161 | 16,0 | 17,3 |
| 18 | 11,4 | 16,4 | 165 | 16,0 | - |

| | | | | | |
|---|---|---|---|---|---|
| *nicht erfindungsgemäss | | | | | |

Das Beispiel 2 im Vergleich mit Beispiel 1 demonstriert die vorliegende Erfindung: eine geeignet gewählte Siloxan-Mischung weist bei konstanter Temperatur eine zeitlich annähernd konstante physikalische Eigenschaft auf (in diesem Fall der Dampfdruck), obwohl sich die chemische Zusammensetzung zeitlich verändert.

## Patentansprüche

1. Mischungen von Methylpolysiloxanen enthaltend mindestens zwei Methylpolysiloxane, ausgewählt aus linearen Verbindungen der allgemeinen Formel I
Me₃SiO-(Me₂SiO)ₓ-SiMe₃ (I),
und cyclischen Verbindungen der allgemeinen Formel II
(Me₂SiO)_{y} (II),
wobei
die Mischung mindestens ein lineares Methylpolysiloxan der allgemeinen Formel I und mindestens ein cyclisches Methylpolysiloxan der allgemeinen Formel II enthält,
**Me** Methylrest bedeutet,
**x** Werte größer oder gleich Null aufweist und der mit den Stoffmengenanteilen gewichtete arithmetische Mittelwert von **x** über alle linearen Methylpolysiloxane zwischen 3 und 20 liegt,
**y** Werte größer oder gleich 3 aufweist und der mit den Stoffmengenanteilen gewichtete arithmetische Mittelwert von **y** über alle cyclischen Methylpolysiloxane zwischen 3 und 6 liegt,
das Zahlenverhältnis der Me₃Si-Kettenendgruppen in den Verbindungen der allgemeinen Formel I zur Summe aus Me₂SiO-Einheiten in den Verbindungen der allgemeinen Formeln I und
II mindestens 1 : 2 und höchstens 1 : 10 ist,
die Anteile der linearen Methylpolysiloxane der allgemeinen Formel I unabhängig voneinander
für **x** = Null zwischen Null und 14 Massen-%,
für **x** = 1 bis 3 jeweils zwischen Null und 14 Massen-%,
für **x** = 4 und 5 jeweils zwischen Null und 14 Massen-%,
für **x** = 6 bis 9 jeweils zwischen Null und 16 Massen-%,
für **x** = 10 und 11 jeweils zwischen Null und 12 Massen-%,
für **x** = 12 bis 14 jeweils zwischen Null und 10 Massen-%,
für **x** = 15 bis 28 jeweils zwischen Null und 10 Massen-%,
für **x** = 29 und 30 jeweils zwischen Null und 8 Massen-%,
für **x** = 31 bis 34 jeweils zwischen Null und 4 Massen-%,
für **x** = 35 bis 40 jeweils zwischen Null und 2 Massen-%,
für **x** = 41 bis 70 jeweils zwischen Null und 1 Massen-%, und
für **x** größer als 70 jeweils zwischen Null und 0,5 Massen-% betragen,
die Anteile der cyclischen Methylpolysiloxane der allgemeinen Formel II unabhängig voneinander
für **y =** 3 zwischen Null und 10 Massen-%,
für **y =** 4 zwischen Null und 30 Massen-%,
für **y =** 5 zwischen Null und 15 Massen-%,
für **y =** 6 zwischen Null und 10 Massen-%,
für **y =** 7 zwischen Null und 8 Massen-%,
für **y =** 8 bis 11 jeweils zwischen Null und 5 Massen-%,
für **y** = 12 bis 15 jeweils zwischen Null und 2,5 Massen-%,
für **y** = 16 bis 19 jeweils zwischen Null und 2 Massen-%,
für **y =** 20 bis 40 jeweils zwischen Null und 1 Massen-%, und
für **y** größer als 40 jeweils zwischen Null und 0,5 Massen-% betragen,
die Summe der Anteile aller cyclischen Methylpolysiloxane der allgemeinen Formel II mindestens 10 Massen-% und höchstens 40 Massen-% beträgt, und
die Mischung bei 25°C flüssig ist und eine Viskosität von weniger als 100 mPa*s aufweist.

2. Mischungen nach Anspruch 1, bei denen der mit den Stoffmengenanteilen gewichtete arithmetische Mittelwert von **x** über alle linearen Methylpolysiloxane zwischen 4 und 15 liegt.

3. Mischungen nach Anspruch 1 oder 2, bei denen der mit den Stoffmengenanteilen gewichtete arithmetische Mittelwert von **y** über alle cyclischen Methylpolysiloxane zwischen 3,5 und 5,5 liegt.

4. Mischungen nach einem der vorangehenden Ansprüche, bei denen das Zahlenverhältnis der Me₃Si-Kettenendgruppen in den Verbindungen der allgemeinen Formel I zur Summe aus Me₂SiO-Einheiten in den Verbindungen der allgemeinen Formeln I und II mindestens 1 : 2,5 und höchstens 1 : 8 beträgt.

5. Mischungen nach einem der vorangehenden Ansprüche, bei denen die Viskosität bei 25°C unter 20 mPa*s liegt.

6. Mischungen nach einem der vorangehenden Ansprüche, bei denen die Mischungen von Methylpolysiloxanen bestehen aus 1-10 Massen-% linearen Methylpolysiloxanen der allgemeinen Formel I, in denen **x** Werte zwischen Null und 8 annimmt und der mit den Stoffmengenanteilen gewichtete arithmetische Mittelwert von **x** zwischen Null und 1,5 liegt,
15-30 Massen cyclischen Methylpolysiloxanen der allgemeinen Formel II, in denen **y** Werte zwischen 3 und 12 annimmt und der mit den Stoffmengenanteilen gewichtete arithmetische Mittelwert von **y** zwischen 3,5 und 5 liegt, und
60-84 Massen-% linearen Methylpolysiloxanen der allgemeinen Formel I, in denen **x** Werte zwischen 4 und 70 annimmt und der mit den Stoffmengenanteilen gewichtete arithmetische Mittelwert von **x** zwischen 4 und 15 liegt, jeweils einschließlich der genannten Grenzwerte,
wobei die Mischungen eine trimodale Molmassenverteilung aufweisen und bei 25°C eine Viskosität von weniger als 10 mPa*s haben.

7. Mischungen nach einem der vorangehenden Ansprüche, bei denen sich die physikalischen Eigenschaften, die ausgewählt werden aus Dichte, Dampfdruck, Viskosität, Wärmekapazität und Wärmeleitfähigkeit der Mischung, nach Erreichen einer konstanten Temperatur zwischen 300°C und 600°C unter Luftausschluß bis zum Erreichen der Gleichgewichtszusammensetzung um maximal 15% verändern.

8. Verwendung der Mischungen nach Anspruch 1 bis 7 als Wärmeträgerflüssigkeiten.

9. Verwendung nach Anspruch 8 für solarthermische Vorrichtungen.

10. Verwendung nach Anspruch 8 oder 9 bei Temperaturen von 200°C bis 550°C,

## Claims

1. Mixtures of methylpolysiloxanes containing at least two methylpolysiloxanes selected from linear compounds of the general formula I
Me₃SiO-(Me₂SiO)ₓ-SiMe₃ (I)
and cyclic compounds of the general formula II
(Me₂SiO)_{y} (II)
where
the mixture contains at least one linear methylpolysiloxane of the general formula I and at least one cyclic methylpolysiloxane of the general formula II,
**Me** is a methyl radical,
**x** has values greater than or equal to zero and the arithmetic mean of **x** over all the linear methylpolysiloxanes, weighted by the molar proportions, is between 3 and 20,
**y** has values greater than or equal to 3 and the arithmetic mean of **y** over all the cyclic methylpolysiloxanes, weighted by the molar proportions, is between 3 and 6,
the numerical ratio of the Me₃Si- chain end groups in the compounds of the general formula I to the sum total of Me₂SiO- units in the compounds of the general formulae I and II is at least 1:2 and at most 1:10,
the proportions of the linear methylpolysiloxanes of the general formula I are each independently,
for **x** = zero, between zero and 14% by mass,
for **x** = 1 to 3, in each case between zero and 14% by mass,
for **x** = 4 and 5, in each case between zero and 14% by mass,
for **x** = 6 to 9, in each case between zero and 16% by mass,
for **x** = 10 and 11, in each case between zero and 12% by mass,
for **x** = 12 to 14, in each case between zero and 10% by mass,
for **x** = 15 to 28, in each case between zero and 10% by mass,
for **x** = 29 and 30, in each case between zero and 8% by mass,
for **x** = 31 to 34, in each case between zero and 4% by mass,
for **x** = 35 to 40, in each case between zero and 2% by mass,
for **x** = 41 to 70, in each case between zero and 1% by mass, and,
for **x** greater than 70, in each case between zero and 0.5% by mass,
the proportions of the cyclic methylpolysiloxanes of the general formula II are each independently,
for **y** = 3, between zero and 10% by mass,
for **y =** 4, between zero and 30% by mass,
for **y =** 5, between zero and 15% by mass,
for **y =** 6, between zero and 10% by mass,
for **y =** 7, between zero and 8% by mass,
for **y** = 8 to 11, in each case between zero and 5% by mass,
for **y =** 12 to 15, in each case between zero and 2.5% by mass,
for **y** = 16 to 19, in each case between zero and 2% by mass,
for **y** = 20 to 40, in each case between zero and 1% by mass, and,
for **y** greater than 40, in each case between zero and 0.5% by mass,
the sum of the proportions of all the cyclic methylpolysiloxanes of the general formula II is at least 10% by mass and at most 40% by mass, and
the mixture is liquid at 25°C and has a viscosity of less than 100 mPa*s.

2. Mixtures according to Claim 1, in which the arithmetic mean of **x** over all the linear methylpolysiloxanes, weighted by the molar proportions, is between 4 and 15.

3. Mixtures according to Claim 1 or 2, in which the arithmetic mean of **y** over all the cyclic methylpolysiloxanes, weighted by the molar proportions, is between 3.5 and 5.5.

4. Mixtures according to any of the preceding claims, in which the numerical ratio of the Me₃Si- chain end groups in the compounds of the general formula I to the sum total of Me₂SiO- units in the compounds of the general formulae I and II is at least 1:2.5 and at most 1:8.

5. Mixtures according to any of the preceding claims, in which the viscosity at 25°C is below 20 mPa*s.

6. Mixtures according to any of the preceding claims, in which the mixtures of methylpolysiloxanes consist of 1-10% by mass of linear methylpolysiloxanes of the general formula I in which **x** assumes values between zero and 8 and the arithmetic mean of **x,** weighted by the molar proportions, is between zero and 1.5, 15-30% by mass of cyclic methylpolysiloxanes of the general formula II in which **y** assumes values between 3 and 12 and the arithmetic mean of **y,** weighted by the molar proportions, is between 3.5 and 5, and 60-84% by mass of linear methylpolysiloxanes of the general formula I, in which **x** assumes values between 4 and 70 and the arithmetic mean of **x,** weighted by the molar proportions, is between 4 and 15, including the limits stated in each case,
where the mixtures have a trimodal molar mass distribution and a viscosity at 25°C of less than 10 mPa*s.

7. Mixtures according to any of the preceding claims, in which the physical properties, selected from density, vapor pressure, viscosity, heat capacity and thermal conductivity of the mixture, after attainment of a constant temperature between 300°C and 600°C under exclusion of air, change by not more than 15% before attainment of the equilibrium composition.

8. Use of the mixtures according to Claims 1 to 7 as heat transfer fluids.

9. Use according to Claim 8 for solar thermal devices.

10. Use according to Claim 8 or 9 at temperatures of 200°C to 550°C.

## Revendications

1. Mélanges de méthylpolysiloxanes contenant au moins deux méthylpolysiloxanes, choisis parmi les composés linéaires de formule générale I
M₃SiO-(Me₂SiO)ₓ-SiMe₃ (I)
et les composés cycliques de formule générale II
(Me₂SiO)_{y} (II)
le mélange contenant au moins un méthylpolysiloxane linéaire de formule générale I et au moins un méthylpolysiloxane cyclique de formule générale II,
Me signifiant un radical méthyle,
x signifiant des valeurs supérieures ou égales à zéro, et la moyenne arithmétique de x pondérée par les fractions molaires sur tous les méthylpolysiloxanes linéaires étant comprise entre 3 et 20,
y signifiant des valeurs supérieures ou égales à 3, et la moyenne arithmétique de y pondérée par les fractions molaires sur tous les méthylpolysiloxanes cycliques étant comprise entre 3 et 6,
le rapport en nombre entre les groupes d'extrémité de chaîne Me₃Si dans les composés de formule générale I et la somme des unités Me₂SiO dans les composés des formules générales I et II étant d'au moins 1:2 et d'au plus 1:10,
les proportions des méthylpolysiloxanes linéaires de formule générale I étant indépendamment les unes des autres
pour x = zéro, entre zéro et 14 % en masse,
pour x = 1 à 3, à chaque fois entre zéro et 14 % en masse,
pour x = 4 et 5, à chaque fois entre zéro et 14 % en masse,
pour x = 6 à 9, à chaque fois entre zéro et 16 % en masse,
pour x = 10 et 11, à chaque fois entre zéro et 12 % en masse,
pour x = 12 à 14, à chaque fois entre zéro et 10 % en masse,
pour x = 15 à 28, à chaque fois entre zéro et 10 % en masse,
pour x = 29 et 30, à chaque fois entre zéro et 8 % en masse,
pour x = 31 à 34, à chaque fois entre zéro et 4 % en masse,
pour x = 35 à 40, à chaque fois entre zéro et 2 % en masse,
pour x = 41 à 70, à chaque fois entre zéro et 1 % en masse, et
pour x supérieur à 70, à chaque fois entre zéro et 0,5 % en masse,
les proportions des méthylpolysiloxanes cycliques de formule générale II étant indépendamment les unes des autres
pour y = 3, entre zéro et 10 % en masse,
pour y = 4, entre zéro et 30 % en masse,
pour y = 5, entre zéro et 15 % en masse,
pour y = 6, entre zéro et 10 % en masse,
pour y = 7, entre zéro et 8 % en masse,
pour y = 8 à 11, à chaque fois entre zéro et 5 % en masse,
pour y = 12 à 15, à chaque fois entre zéro et 2,5 % en masse,
pour y = 16 à 19, à chaque fois entre zéro et 2 % en masse,
pour y = 20 à 40, à chaque fois entre zéro et 1 % en masse, et
pour y supérieur à 40, à chaque fois entre zéro et 0,5 % en masse,
la somme des proportions de tous les méthylpolysiloxanes cycliques de formule générale II étant d'au moins 10 % en masse et d'au plus 40 % en masse, et
le mélange étant liquide à 25 °C et présentant une viscosité de moins de 100 mPa*s.

2. Mélanges selon la revendication 1, dans lesquels la moyenne arithmétique de x pondérée par les fractions molaires sur tous les méthylpolysiloxanes linéaires est comprise entre 4 et 15.

3. Mélanges selon la revendication 1 ou 2, dans lesquels la moyenne arithmétique de y pondérée par les fractions molaires sur tous les méthylpolysiloxanes cycliques est comprise entre 3,5 et 5,5.

4. Mélanges selon l'une quelconque des revendications précédentes, dans lesquels le rapport en nombre entre les groupes d'extrémité de chaîne Me₃Si dans les composés de formule générale I et la somme des unités Me₂SiO dans les composés des formules générales I et II est d'au moins 1:2,5 et d'au plus 1:8.

5. Mélanges selon l'une quelconque des revendications précédentes, dans lesquels la viscosité à 25 °C est de moins de 20 mPa*s.

6. Mélanges selon l'une quelconque des revendications précédentes, dans lesquels les mélanges de méthylpolysiloxanes sont constitués par
1 à 10 % en masse de méthylpolysiloxanes linéaires de formule générale I, dans lesquels x prend des valeurs comprises entre zéro et 8, et la moyenne arithmétique de x pondérée par les fractions molaires est comprise entre zéro et 1,5,
15 à 30 % en masse de méthylpolysiloxanes cycliques de formule générale II, dans lesquels y prend des valeurs comprises entre 3 et 12, et la moyenne arithmétique de y pondérée par les fractions molaires est comprise entre 3,5 et 5, et
60 à 84 % en masse de méthylpolysiloxanes linéaires de formule générale I, dans lesquels x prend des valeurs comprises entre 4 et 70, et la moyenne arithmétique de x pondérée par les fractions molaires est comprise entre 4 et 15, à chaque fois y compris les valeurs limites indiquées,
les mélanges présentant une distribution des masses molaires trimodales et ayant à 25 °C une viscosité de moins de 10 mPa*s.

7. Mélanges selon l'une quelconque des revendications précédentes, dans lesquels les propriétés physiques, qui sont choisies parmi la densité, la pression de vapeur, la viscosité, la capacité calorifique et la conductivité thermique du mélange, changent d'au plus 15 % après avoir atteint une température constante comprise entre 300 °C et 600 °C avec exclusion de l'air jusqu'à avoir atteint de la composition à l'équilibre.

8. Utilisation des mélanges selon les revendications 1 à 7 en tant que fluides caloporteurs.

9. Utilisation selon la revendication 8 pour des dispositifs thermiques solaires.

10. Utilisation selon la revendication 8 ou 9 à des températures de 200 °C à 550 °C.
